# FASCICULE DE BREVET EUROPEEN

(11) **EP 2 301 101 B1**
(45) Date de publication et mention de la délivrance du brevet: **07.11.2012**
(21) Numéro de dépôt: 09761862.3
(22) Date de dépôt: 07.05.2009
(51) Int. Cl.: H01M 8/10, H01M 8/24, H01M 8/02

(54) **PILE À COMBUSTIBLE À EMPILEMENT MEMBRANE/ÉLECTRODES PERPENDICULAIRE AU SUBSTRAT DE SUPPORT ET PROCÉDÉ DE RÉALISATION**
BRENNSTOFFZELLE MIT EINEM ZU DEM TRÄGERSUBSTRAT SENKRECHTEN MEMBRAN-/ELEKTRODENSTAPEL UND HERSTELLUNGSPROZESS
FUEL CELL HAVING A MEMBRANE/ELECTRODE STACK PERPENDICULAR TO THE SUPPORT SUBSTRATE, AND PRODUCTION PROCESS

(30) Priorité: 19.05.2008 FR 0802681
(43) Date de publication de la demande: 30.03.2011
(73) Titulaire: Commissariat à l'Énergie Atomique et aux Énergies Alternatives, 75015 Paris (FR)
(72) Inventeur: DIEM, Bernard, F-38130 Echirolles (FR); BACLET, Philippe, 21120 Is-sur-Tille (FR); DIJON, Jean, F-38800 Champagnier (FR); LAURENT, Jean-Yves, F-38420 Domène (FR); SCHOTT, Pascal, F-38250 Villars de Lans (FR)
(74) Mandataire: Gris, Sébastien
(86) Numéro de dépôt international: PCT/FR2009/000540
(87) Numéro de publication internationale: WO 2009/150311

(56) Documents cités:
- US-A1- 2007 202 378
- US-B1- 6 312 846
- WAINRIGHT J S ET AL: "Microfabricated fuel cells" ELECTROCHIMICA ACTA, ELSEVIER SCIENCE PUBLISHERS, BARKING, GB, vol. 48, no. 20-22, 30 septembre 2003 (2003-09-30), pages 2869-2877, XP004446980 ISSN: 0013-4686
- KIM ET AL: "Development of a miniaturized polymer electrolyte membrane fuel cell with silicon separators" JOURNAL OF POWER SOURCES, ELSEVIER, AMSTERDAM, NL, vol. 161, no. 1, 30 septembre 2006 (2006-09-30), pages 432-436, XP022223330 ISSN: 0378-7753

## Description

### Domaine technique de l'invention

L'invention est relative à une pile à combustible comportant au moins un empilement muni d'une membrane électrolytique située entre une première électrode et une seconde électrode perpendiculaires à un substrat de support, lesdites première et seconde électrodes comportant chacune une couche catalytique en contact avec la membrane électrolytique.

### État de la technique

Le brevet US 6,312,846 décrit une pile à combustible, illustrée à la figure 1, réalisée dans un substrat de support 1, de préférence en silicium. Le substrat de support 1 est tout d'abord gravé de manière à former une tranchée 2 comportant une base 3 reliant deux flancs opposés 4a et 4b. Un empilement 5 constitutif de la pile à combustible est ensuite réalisé sur la base 3 de la tranchée perpendiculairement au substrat 1 (les principaux éléments de l'empilement sont disposés côte à côte le long du substrat et perpendiculaires au substrat). L'empilement comporte une membrane électrolytique 6 située entre deux électrodes, comportant chacune une couche catalytique 7 perpendiculaire à la base 3, reliées à des collecteurs de courant 14. La hauteur de l'empilement 5 est sensiblement égale à la profondeur de la tranchée 2. La pile à combustible comporte deux canaux d'injection 8a et 8b délimités par l'espace laissé libre de chaque côté de l'empilement 5 entre l'empilement 5 et les flancs 4a et 4b. Le premier canal 8a est destiné à la circulation d'un fluide combustible, par exemple de l'hydrogène, tandis que le deuxième canal 8b est destiné à la circulation d'un fluide comburant, par exemple de l'oxygène ou de l'air. La tranchée 2 est ensuite recouverte par un couvercle 9, équipé d'une couche adhésive 10 et fermant hermétiquement les canaux d'injection 8a et 8b.

Selon un autre mode de réalisation, illustré à la figure 2, le brevet US 6,312,846 décrit un empilement, réalisé dans la tranchée 2, dont la membrane (non représentée) est disposé entre deux parois intermédiaires 11 a et 11 b. Un espace, aménagé de chaque côté des parois intermédiaires 11 a et 11 b, forme les canaux d'injection 8a et 8b. Les parois intermédiaires 11 a et 11 b comportent chacune une pluralité de fentes 12. Les électrodes comportent chacune une partie métallique 13, située à la base externe de la paroi intermédiaire correspondante et un catalyseur 7, déposé au niveau des fentes 12 et en contact avec la partie métallique 13, qu'il recouvre en partie. Les parties métalliques 13 des électrodes sont reliées à des conducteurs métallique, faisant fonction de collecteurs de courant 14. Le catalyseur 7 forme un point, appelé point triple source de la réaction, où la membrane électrolytique, la couche catalytique 7 et un des fluides (combustible ou comburant) sont en contact. Ce point triple source de la réaction a une surface limitée à la somme des surfaces des fentes 12 des pans 11a et 11b. L'efficacité en rendement de surface active est donc restreint à la surface des fentes 12 pour chaque cloison. De plus, la conduction électrique est limitée aux seuls collecteurs de courant 14, induisant une perte ohmique élevée au niveau des couchers catalytiques 7. En outre, l'isolation entre les électrodes par le matériau de support, dans lequel est réalisé la tranchée, n'est pas de bonne qualité.

### Objet de l'invention

Le but de l'invention consiste à réaliser une pile à combustible dont la densité de puissance est optimisée et la perte ohmique réduite.

Ce but est atteint par le fait que chaque électrode comporte une couche de diffusion poreuse, électriquement conductrice, et en ce que chaque empilement est inséré entre des première et deuxième cloisons de support, électriquement conductrices, perpendiculaires au substrat de support et constituant des collecteurs de courant de l'empilement, lesdites cloisons de support étant électriquement isolées entre elles.

Selon une variante, la pile à combustible comporte, côte à côte, une pluralité d'empilements, deux empilements adjacents comportant une cloison commune, des bornes de la pile étant connectées aux cloisons situées aux extrémités de la pluralité d'empilements.

Selon un premier mode de réalisation, la pile à combustible comporte au moins deux empilements superposés, une couche électriquement isolante, disposée entre le substrat de support et l'empilement correspondant, comportant des passages pour un fluide entre les couches de diffusion de deux empilements superposés.

Selon un deuxième mode de réalisation préférentiel, chaque cloison séparant deux empilements adjacents comporte un canal d'injection d'un fluide comportant deux parois, perpendiculaires au substrat de support, et munies chacune d'une pluralité d'orifices traversants pour l'injection d'un même fluide dans les couches de diffusion adjacentes séparées par ladite cloison.

L'invention est aussi relative à un procédé de réalisation d'une pile à combustible comportant les étapes successives suivantes :
- le report d'une plaque en un matériau constituant les cloisons de support sur le substrat de support, des moyens d'interconnexion électrique. étant disposés sur la plaque et/ou le substrat de support,
- la gravure des cloisons dans la plaque,
- le dépôt des couches de diffusion et des couches catalytique sur les cloisons par électrodéposition, avec polarisation des cloisons par l'intermédiaire des moyens d'interconnexion électrique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

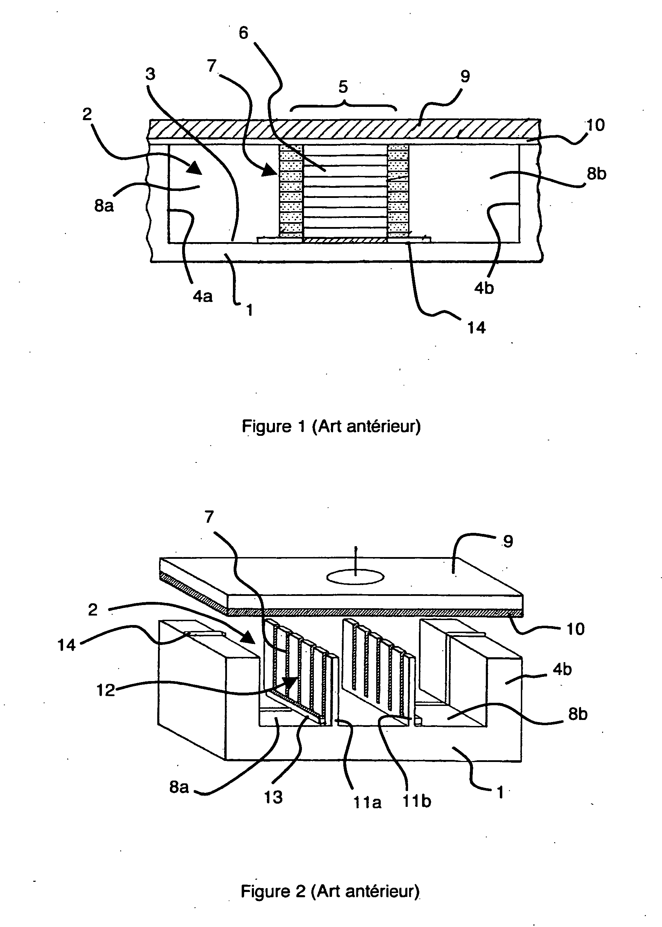

La figure 1 illustre une vue en coupe d'une pile à combustible selon l'art antérieur.
La figure 2 illustre une vue en perspective d'une autre pile à combustible selon l'art antérieur.
La figure 3 illustre schématiquement une vue en coupe d'un empilement selon l'invention.
La figure 4 illustre schématiquement une vue en coupe d'une pluralité d'empilements selon une variante de l'invention.
La figure 5 illustre une vue en coupe d'un premier mode de réalisation de l'invention.
La figure 6 illustre une vue en coupe d'une variante de réalisation du premier mode de réalisation de la figure 5.
Les figures 7 à 9 illustrent, vue en coupe, différentes étapes d'un procédé de fabrication du premier mode de réalisation.
La figure 10 illustre une vue en coupe d'un second mode de réalisation de l'invention.
La figure 11 illustre en vue de dessus une variante du second mode de réalisation.
La figure 12 illustre une coupe selon A-A de la figure 10.
Les figures 13 à 14 illustrent, en coupe, différentes étapes d'un procédé de fabrication du second mode de réalisation.
Les figures 15 et 16 illustrent deux variantes de connexion électrique du second mode de réalisation.

### Description d'un mode préférentiel de l'invention

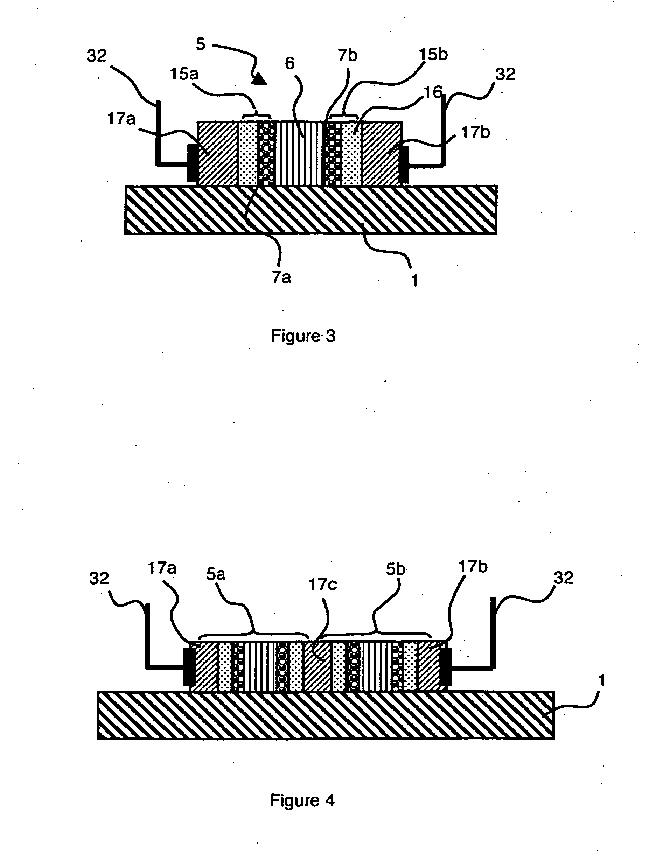

Comme illustré à la figure 3, une pile à combustible comporte au moins un empilement 5 sensiblement perpendiculaire au substrat de support 1. L'empilement 5 est, classiquement muni d'une membrane électrolytique 6 située entre des première et seconde électrodes 15a et 15b perpendiculaires au substrat 1. Les première et seconde électrodes comportent chacune une couche catalytique (7a,7b) en contact avec la membrane électrolytique 6. Un tel empilement 5 permet la fabrication d'électricité grâce à l'oxydation sur la première électrode 15a d'un fluide combustible, par exemple de l'hydrogène, couplée à la réduction sur la deuxième électrode 15b d'un comburant, par exemple l'oxygène de l'air.

Chaque électrode 15a et 15b comporte une couche de diffusion poreuse 16 électriquement conductrice. Chaque empilement 5 est inséré entre des première et deuxième cloisons 17a et 17b de support, électriquement conductrices, et perpendiculaires au substrat de support 1. Une couche de diffusion 16 poreuse de chaque électrode est en contact électrique, d'une part, avec la couche catalytique 7a ou 7b de l'électrode correspondante et, d'autre part, avec la cloison 17a ou 17b correspondante. Ainsi, les cloisons 17a et 17b servent à la fois de support pour l'empilement 5 et de collecteurs de courant connectés aux bornes 32 de la pile à combustible.

Les cloisons de support 17a, 17b sont isolées électriquement entre elles. À titre d'exemple, cette isolation électrique des cloisons 17a, 17b est réalisée par le substrat de support 1, 25 lui-même isolant électriquement ou par une couche isolante 20 disposée entre le substrat de support 1, 25 et l'empilement 5. La surface active, correspondant à toute la surface des cloisons, étant plus grande que dans les piles à combustibles connues, la puissance globale de la pile est améliorée. Les cloisons de support sont électriquement isolées entre elles.

Avantageusement, chaque couche de diffusion poreuse 16 peut être réalisée à base de nanotubes ou de nanofils. Les nanotubes ou les nanofils sont alors sensiblement parallèles au substrat de support 1 et relient la couche catalytique 7a ou 7b de l'électrode à la cloison 17a ou 17b correspondante. L'utilisation de nanotubes ou de nanofils permet d'assurer une diffusion efficace des fluides (combustible et comburant) vers la couche catalytique 7a ou 7b, une bonne conduction thermique et électrique, et permet de limiter certaines contraintes pouvant intervenir lors d'un ronflement de la membrane électrolytique 6, notamment lorsque celle-ci est réalisée en Nafion©.

Les nanofils ou nanotubes formant les couches de diffusion 16 poreuses sont, de préférence, réalisés en carbone. Le carbone, présentant l'avantage d'être conducteur, permet aux nanofils ou aux nanotubes de relier électriquement la cloison 17a ou 17b à la couche catalytique 7a ou 7b correspondante. Les nanofils ou nanotubes peuvent être réalisés par dépôt sur la paroi latérale intérieure de chaque cloison 17a ou 17b d'un catalyseur de croissance, choisi parmi le fer, le cobalt ou le nickel. Le dépôt de ce catalyseur peut être réalisé par dépôt électrochimique ou par PVD. La croissance des nanotubes ou des nanofils se fait, de préférence, entre 550°C et 600°C avec de l'acétylène. La longueur des nanotubes ou des nanofils correspond à la largeur de la couche de diffusion poreuse 16, typiquement entre 30µm et 100µm obtenus en environ 30 minutes de croissance. Une telle structuration de la couche de diffusion poreuse 16 permet d'assurer une diffusion efficace des fluides vers les couches catalytiques 7a et 7b de chaque empilement.

Selon une variante de réalisation, les couches de diffusion poreuse 16 peuvent être réalisées en matériau semiconducteur poreux en utilisant, à titre d'exemple, des plaques de silicium ayant subies une anodisation en présence de HF, du graphite, de l'Al céramique ou tout autre matériau pouvant acquérir localement une certaine porosité aux fluides.

Les couches catalytiques 7 des première et seconde électrodes 17a, 17b peuvent être de nature et/ou de structure différentes.

Comme illustré à la figure 4, une pile à combustible peut comporter une pluralité d'empilements (5a et 5b sur la figure 4) réalisés côte à côte sur le même substrat de support 1, de manière à augmenter la densité de puissance par rapport à la surface de la pile à combustible et à limiter les pertes ohmiques lorsque les empilements 5 sont reliés électriquement entre eux. Deux empilements adjacents 5a et 5b sont alors séparés par une cloison intermédiaire 17c, qui remplace la cloison 17b de l'empilement 5a et la cloison 17a de l'empilement 5b (figure 3), cette cloison 17c, électriquement conductrice, relie électriquement les électrodes de deux empilements adjacents. Les bornes 32 de la pile sont alors connectées aux cloisons 17a et 17b situées aux extrémités de la pluralité d'empilements.

La pluralité d'empilements réalisés sur un même substrat de support constitue ainsi une plaque multipolaire. Les empilements sont alors reliés électriquement entre eux en série. Le montage en série implique des contraintes sur la circulation des fluides dans les empilements.

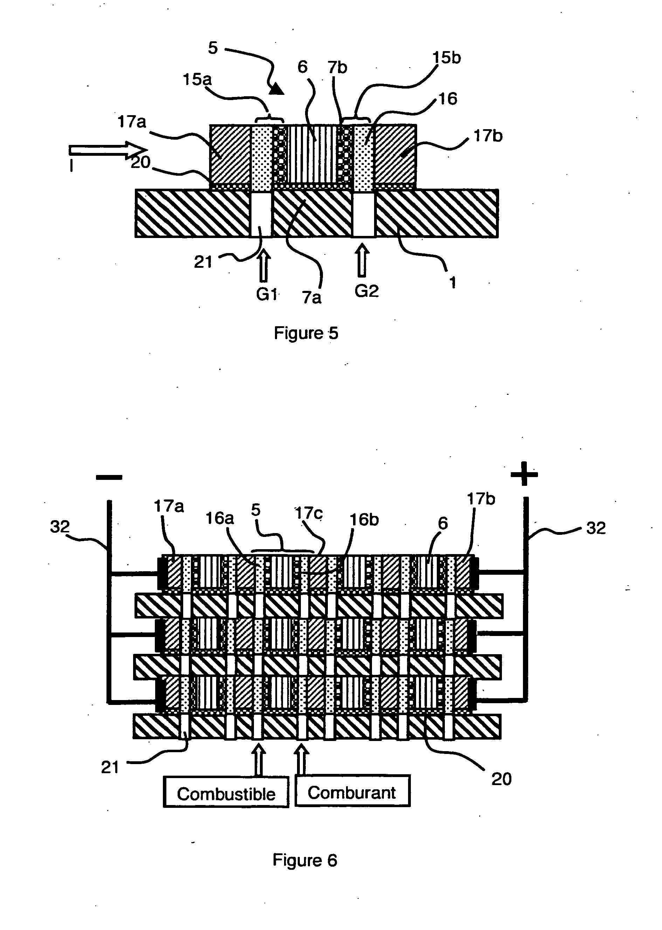

Selon un premier mode de réalisation particulier illustré à la figure 5, des passages 21 formés dans le substrat 1 de support d'au moins un empilement 5, perpendiculaire au substrat de support 1, permettent aux fluides de circuler perpendiculairement au substrat de support 1 (flèches G1 et G2) alors que le courant circule parallèlement au substrat de support 1 (flèche I). Une couche électriquement isolante 20 est disposée entre le substrat de support 1, les cloisons 17a, 17b et l'empilement correspondant dans le cas où le substrat n'est pas isolant.

Dans la variante de la figure 6, plusieurs plaques multipolaires sont superposées. Le substrat de support 1 de chaque plaque multipolaire comporte alors des passages 21 pour les fluides (combustible et comburant) entre les couches de diffusion 16a, 16b poreuses de deux empilements 5 superposés.

L'assemblage de plusieurs plaques multipolaires en superposant les empilements de deux plaques successives permet de constituer différents montages électriques. Par exemple, un montage appelé « filtre presse » est illustré à la figure 6. Comme sur la figure 4, deux couches de diffusion de deux empilements adjacents d'une plaque multipolaire sont séparées par une cloison intermédiaire 17c. Comme sur la figure 5, le fluide combustible, par exemple de l'hydrogène, circule dans une première couche de diffusion 16a, et le fluide comburant, par exemple l'oxygène de l'air, circule dans une deuxième couche de diffusion 16b de chaque empilement. Les cloisons d'extrémité 17a et 17b des plaques multipolaires superposées sont ensuite reliées en parallèle, respectivement à deux bornes 32. Un tel montage série/parallèle permet d'augmenter la tension dans la pile à combustible. Bien entendu la superposition d'une pluralité de plaques multipolaire permet la réalisation de nombreuses autres variantes de connexion électrique. À titre d'exemple les plaques multipolaires peuvent toutes être connectées en série aux bornes de la pile, mise en parallèles deux à deux et les paires ainsi formées connectées en série aux bornes de la pile, etc.

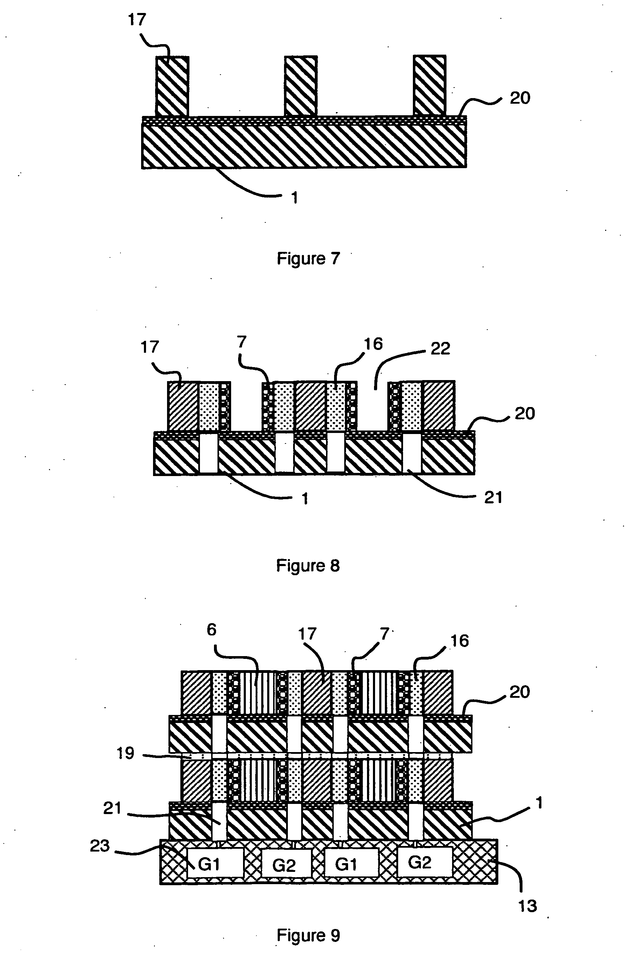

Deux plaques multipolaires superposées sont avantageusement séparées par un joint assurant l'étanchéité 19 (figure 9). Le joint 19 est ajouré au niveau des couches de diffusion poreuse 16, permettant ainsi aux fluides de passer d'un empilement inférieur vers un empilement supérieur (ou l'inverse) perpendiculairement au substrat de support 1.

Le premier mode de réalisation peut notamment être mis en oeuvre par des techniques dérivées de la micro-électronique basées sur des technologies de type supercapacité CMOS ou de microtechnologies.

À titre d'exemple, la pile à combustible peut être réalisée en utilisant des plaques de silicium photovoltaïque dont le coût est aujourd'hui relativement bas, et d'en faire un matériau poreux, le dimensionnement des pores étant , de préférence, compris entre 20nm et 200nm. Des canaux de distribution macroscopique peuvent également être réalisés en perçant les plaques en face arrière pour faciliter la diffusion des fluides dans les électrodes. Les couches de diffusion poreuses peuvent être rendues électriquement conductrices par dépôt ALD de titane (« Atomic Layer Déposition » en anglais). Un tel dépôt dans les couches de diffusion 16 permet de minimiser la quantité de titane et donc le coût. Les couches catalytiques peuvent être en platine, la surface en contact avec la membrane pouvant être nanostructurée pour améliorer la surface d'échange.

Les figures 7 à 9 illustrent un procédé de réalisation du premier mode de réalisation. Le procédé comporte les étapes successives suivantes réalisées sur un substrat 1, de préférence en silicium, comportant une couche isolante 20 enterrée :
- la localisation des empilements par gravure du substrat avec arrêt sur la couche isolante 20 enterrée (figure 7) pour former les cloisons 17. La gravure peut être réalisée par gravure réactive profonde (RIE) ou par gravure chimique (KOH). La partie du substrat de silicium initial disposée sous la couche isolante enterrée constitue alors le substrat de support 1.
- la réalisation des passages 21 dans le substrat de support 1 et la couche isolante 20, permettant la circulation d'un fluide de type combustible ou comburant, tels que l'hydrogène et l'oxygène dans les couches de diffusion. Ces passages 21 peuvent être réalisés par gravure profonde du substrat de support (figure 8) ou en rendant localement le substrat de support poreux à l'emplacement des passages.
- le dopage des cloisons de support 17 en silicium (figure 8), pour les rendre électriquement conductrices par exemple, par implantation ionique.
- la réalisation des couches de diffusion 16 (figure 8), par exemple par électrodéposition ou par croissance de nanofils ou de nanotubes sensiblement parallèles au substrat de support 1, après dépôt sur les parois internes des cloisons 17, par exemple par PVD, d'une couche de catalyseur, par exemple de fer.
- le dépôt des couches catalytiques 7 de chaque empilement, par exemple par dépôt PECVD de platine ou par électrodéposition.
- le remplissage des cavités 22 formées par l'espace libre restant entre les électrodes de chaque empilement, pour former les membranes électrolytiques 6. Les cavités 22 peuvent, par exemple, être remplies par jet d'encre par une solution à base de Nafion©.
- l'obturation des cavités 22 par dépôt d'un film polymère. Le film polymère est, de préférence, déposé sur les empilements, puis ajouré en regard des couches de diffusion 16. Le film polymère peut aussi former le joint 19 d'étanchéité permettant la superposition de plusieurs plaques.

Une telle réalisation permet de séparer les fonctions de conduction électrique et d'étanchéité, tout en facilitant l'assemblage de la pile. De plus, le montage en série des empilements disposés au même niveau est réalisé automatiquement au cours de la fabrication, permettant l'optimisation et la réduction des pertes ohmiques. Comme illustré à la figure 9, une plaque fluidique 13 peuvent être rapportée au moins d'un côté de la superposition de plaques multipolaires. La plaque fluidique 13 comporte des canaux de distribution 23 et de récupération de fluides connectés aux passages 21.

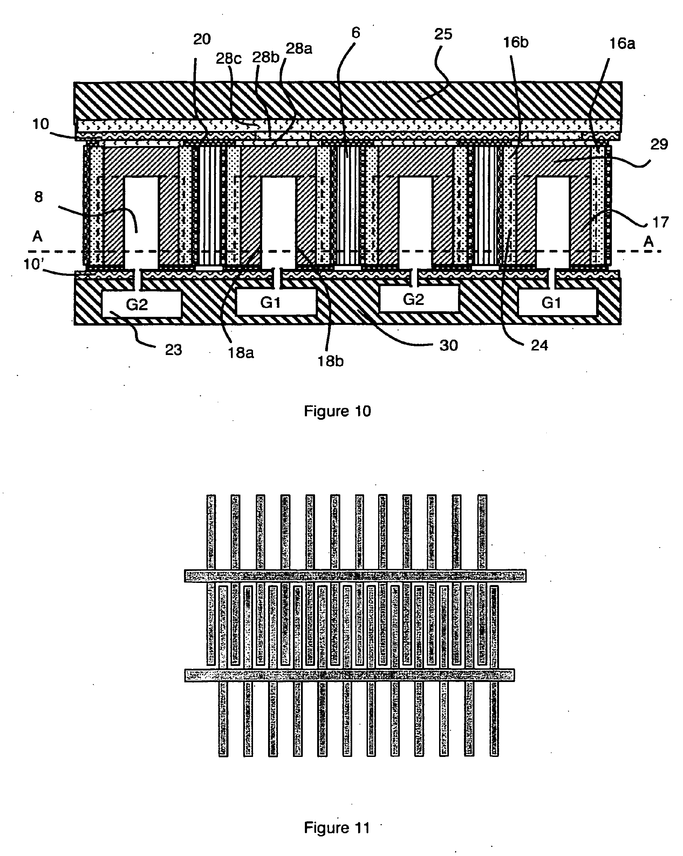

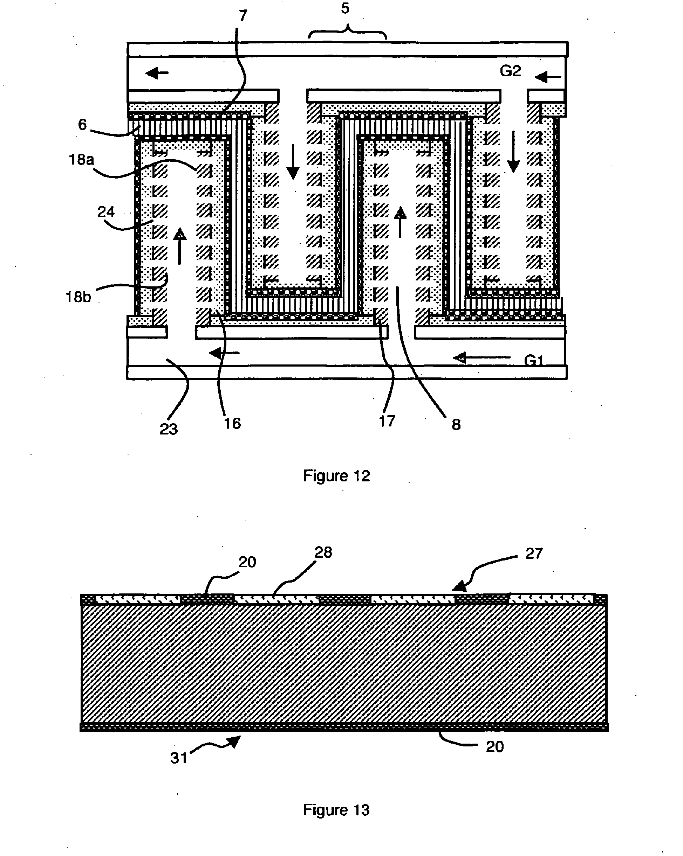

Selon un deuxième mode de réalisation, illustré à la figure 10, chaque cloison 17 séparant deux empilements adjacents disposés sur un même niveau comporte un canal d'injection 8 d'un fluide. Le canal d'injection 8 comporte deux parois latérales 18 (18a et 18b sur la figure 10), sensiblement perpendiculaires au substrat de support 25. Chacune des parois 18 comporte (figure 12) une pluralité d'orifices 24 traversants pour l'injection, à partir du même canal d'injection, d'un même fluide dans deux couches de diffusion 16 (16a et 16b) adjacentes séparées par la cloison 17. Ainsi les orifices 24 réalisent une liaison entre le canal d'injection 8 et les couches de diffusion 16. De préférence, le nombre d'orifices 24 de chaque paroi 18a, 18b est optimisé de manière à obtenir un compromis entre la rigidité mécanique des cloisons 17, la conduction électrique et la surface effective d'échange de fluide entre le canal d'injection 8 et les couches de diffusion 16a, 16b.

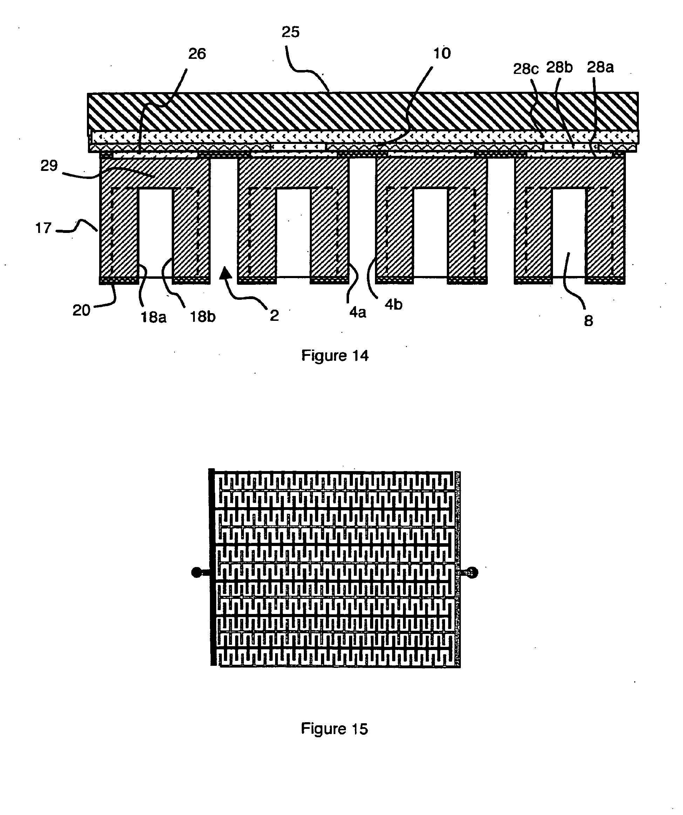

Les empilements peuvent être pris en sandwich entre deux plaques horizontales de manière à former un assemblage élémentaire. Une pluralité d'empilements sont fixés côte à côte à une première plaque 25, servant de substrat de support, par une couche adhésive 10 ou par toute autre technique d'assemblage. La plaque 25 sert de fixation mécanique, pour les cloisons verticales 17 et réalise les interconnexions électriques par l'intermédiaire de couches de métallisation 28 (28a, 28b, 28c sur les figures 10 et 14). La plaque réalise aussi les isolations électriques entre les différents empilements. Cette première plaque 25 est, de préférence, réalisée dans un substrat de silicium.

Une deuxième plaque 30 comporte les canaux de distribution 23 et de récupération des gaz. Les canaux de distribution 23 sont reliés aux canaux d'injection 8. La deuxième plaque 30 peut être fixée aux empilements par l'intermédiaire d'un additif adhésif 10' ou par toute autre technique d'assemblage appropriée, telle que le collage de plaquette (« wafer bonding »), le collage eutectique (« eutectique bonding »), le collage anodique (« anodique bonding »), etc.

Selon une variante (non représentée), il est possible d'augmenter la puissance de la pile en superposant plusieurs assemblages élémentaires. Dans ce cas une plaque séparant deux assemblages élémentaires adjacents peut à la fois intégrer les interconnexions électriques, ainsi que les canaux de distribution et de récupération de fluide sur chaque face. Ainsi, la pile à combustible comporte au moins un empilement inférieur et un empilement supérieur superposés, le substrat de support de l'empilement inférieur comportant des canaux de distributions, formant alors la plaque de distribution de l'empilement supérieur.

De préférence, comme illustré aux figures 11 et 12, l'arrangement des empilements est interdigité. Cet arrangement permet d'obtenir un coefficient de remplissage maximal ainsi qu'une interconnexion électrique de type série/parallèle. Afin de réaliser un tel arrangement, les membranes électrolytiques 6, perpendiculaires au substrat de support 25, des empilements 5 adjacents sont constituées par des segments, verticaux sur la figure 12, reliés les uns aux autres par des segments horizontaux sur la figure 12, de manière à constituer une membrane 6 continue en forme de créneaux. Un ensemble continu destiné à former les électrodes 15 est constitué d'une couche de diffusion 16 sur laquelle est formée une couche catalytique 7, cet ensemble est disposé de part et d'autre de la membrane 6. Une cloison verticale 17, comportant un canal d'injection 8, est disposée entre deux segments verticaux (membrane 6, couche 7 et couche 16), deux couches de diffusion 16 verticales adjacentes, disposées de part et d'autre de la cloison 17, étant disposées d'un même côté de la membrane continue 6.

De préférence, les connexions métalliques de la pile à combustible sont en forme de peignes interdigités (figures 11 et 12). Un peigne est connecté aux cloisons adjacentes disposées d'un même côté de la membrane 6, correspondant alors à un même type d'électrode.

Une pile à combustible de ce type est réalisée par :
- le report d'une plaque en un matériau constituant les cloisons 17a, 17b de support sur le substrat de support 25, des moyens d'interconnexion électrique 28a, 28b, 28c étant disposés sur la plaque et/ou le substrat de support 25.
- la gravure des cloisons dans la plaque,
- le dépôt des couches de diffusion 16 et des couches catalytique 7 sur les cloisons par électrodéposition ou dépôt électrochimique « ECD », avec polarisation des cloisons par l'intermédiaire des moyens d'interconnexion électrique.

L'électrolyte formant la membrane 6 peut par la suite être injectée entre les couches catalytiques 7, au niveau d'une cavité délimitée par les couches catalytiques 7.

Les figures 13, 14 et 10 illustrent plus en détail le procédé de réalisation du deuxième mode de réalisation. Le procédé comporte les étapes successives suivantes, réalisées à partir d'un substrat initial, de préférence en silicium monocristallin, polycristallin ou multicristallin fortement dopé, constituant la plaque en matériau constituant les cloisons :
- le dépôt d'une couche isolante 20 sur deux faces opposées du substrat initial (figure 13). Ce dépôt peut avoir une épaisseur de 0,3µm et être réalisé en nitrure de silicium déposé par LPCVD ou PECVD.
- des ouvertures sont pratiquées sur une première face 27 du substrat par des techniques classiques de masquage et de gravure pour enlever localement la couche isolante 20 et rendre accessible le substrat. Ces ouvertures sont réalisées aux emplacements des futures cloisons 17,
- le dépôt d'une première couche de métallisation 28a en matériau électriquement conducteur, par exemple or, cuivre ou aluminium au niveau des ouvertures. L'épaisseur de la couche de métallisation 28a doit être suffisante pour permettre le transport du courant en minimisant les pertes résistives. Elle est en général de quelques micromètres,
- la solidarisation de la première plaque 25, servant de substrat de support, sur la première face 27 pour assurer les fonctions d'interconnexion électrique et de support mécanique des empilements 5 pour la suite du procédé de fabrication. Avant solidarisation, la première plaque 25 est munie d'au moins une deuxième couche de métallisation (28b, 28c), gravée de manière à former les interconnexions rentrant en contact avec les parties métalliques 28a. La plaque 25 peut être en verre, SiN, inox. Dans le cas où la plaque 25 n'est pas électriquement isolante, une couche d'isolation électrique (non représentée) est intercalée entre la plaque 25 et la couche métallique 28b, 28c.
- la gravure du substrate initial, à partir de sa seconde face 31 sur toute l'épaisseur (de l'ordre de 400 à 700µm) du substrat initial. Cette gravure délimite (figure 14) les cloisons 17 et les emplacements des empilements par la formation d'une tranchée 2 comportant deux flancs 4a et 4b en regard l'un de l'autre au niveau de chaque empilement 5. À titre d'exemple, chaque tranchée a une épaisseur d'environ 6µm, deux tranchées étant séparées par environ 25µm.
- la réalisation des couches de diffusion 16 sur les flancs 4a et 4b de chaque tranchée 2. De préférence, ces couches de diffusion 16 sont réalisées par anodisation localisée du silicium dans une solution d'acide fluoridique, l'application d'une tension d'anodisation étant possible grâce à aux couches de métallisation 28a, 28b, 28c pouvant servir d'électrodes, ou par croissance de nanofils ou de nanotube sur les flancs 4a et 4b.
- le dépôt des couches catalytiques 7, de préférence en platine, par électrodéposition ou dépôt électrochimique localisé sur les couches de diffusion 16a et 16b. La localisation est possible grâce à la polarisation via les couches métalliques 28a, 28b, 28c, il est ainsi possible de réaliser les première et seconde électrodes de nature et/ou de structure différentes par exemple en déposant une épaisseur de couche différente selon la première ou la seconde électrode.
- le remplissage des tranchées 2 par de l'électrolyte pour former la membrane électrolytique 6. Cet électrolyte peut être à base de Nafion© et déposée localement par jet d'encre. Si besoin, ce remplissage peut être effectué en plusieurs opérations afin d'obtenir une membrane solide par évaporation du solvant contenu dans le Nafion©. Le remplissage peut aussi être fait de manière globale, en fin de procédé par injection.
- la réalisation des canaux d'injection 8 et des orifices 24 dans chaque cloison 17. Ces canaux sont, de préférence, réalisés par gravure. Celle-ci est arrêtée de manière à conserver un fond de cloison 29 plein dont l'épaisseur est, de préférence, de l'ordre de 50µm, assurant ainsi la conduction électrique et la résistance mécanique de l'ensemble.

La dimension des canaux d'injection 8, et donc la dimension des cloisons 17, peut différer en fonction du fluide et la géométrie être adaptée en fonction du flux nécessaire. En particulier, l'oxygène ou l'air nécessite un flux plus important que l'hydrogène. Les orifices 24 en contact avec les couches de diffusion poreuses permettent la diffusion des fluides sur toute la surface active tout en conservant une tenue mécanique suffisante.

Une deuxième plaque 30 est ensuite reportée sur la seconde face 31 du substrat initial. Elle assure à la fois la fermeture hermétique des tranchées 2 et des canaux d'injection 8. Cette deuxième plaque 30 comporte le réseau de canaux de distribution 23 de deux fluides différents. La gravure des canaux de distribution 23 est avantageusement réalisée par gravure ionique réactive profonde (DRIE). La géométrie de ces canaux pouvant être importante, il peut être envisagé un formage par emboutissage. Des canaux de refroidissement (non représentés) peuvent être réalisés dans la deuxième plaque 30. Le rôle de tels canaux est d'assurer la fonction de refroidissement de la pile à combustible.

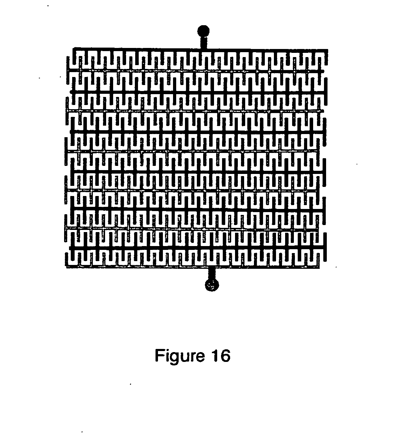

L'arrangement en forme de peigne permet une versatilité au niveau des connexions électriques en fonction de la tension de sortie souhaitée. Les figures 15 et 16 illustrent respectivement un exemple d'interconnexion bipolaire, où tous les empilements sont connectés en parallèle et une interconnexion multipolaire où tous les empilements sont connectés sous forme série/parallèle.

## Revendications

1. Pile à combustible comportant au moins un empilement (5) muni d'une membrane électrolytique (6) située entre une première électrode (15a) et une seconde électrode (15b) perpendiculaires à un substrat de support (1, 25), lesdites première et seconde électrodes (15a, 15b) comportant chacune une couche catalytique (7a,7b) en contact avec la membrane électrolytique (6), pile **caractérisée en ce que** chaque électrode comporte une couche de diffusion (16) poreuse d'alimentation en fluide, ladite couche de diffusion étant électriquement conductrice et séparée de la membrane par la couche catalytique associée, et **en ce que** chaque empilement (5) est pris en sandwich entre des première et deuxième cloisons (17a, 17b) de support, électriquement conductrices, perpendiculaires au substrat de support (1) et constituant des collecteurs de courant de l'empilement (5), lesdites cloisons (17a, 17b) de support étant électriquement isolées entre elles.

2. Pile à combustible selon la revendication 1, **caractérisée en ce que** les cloisons de support (17) sont isolées les unes des autres par une couche isolante (20) disposée entre le substrat de support (1,25) et l'empilement (5) correspondant.

3. Pile à combustible selon la revendication 1, **caractérisée en ce que** le substrat de support (1, 25) est réalisé en matériau électriquement isolant.

4. Pile à combustible selon l'une quelconque des revendications 1 à 3 **caractérisée en ce que** la couche de diffusion (16) de chaque électrode (15a, 15b) comporte une pluralité de nanofils ou de nanotubes sensiblement parallèles au substrat de support (1) et reliant la couche catalytique (7) de l'électrode à la cloison (17) correspondante.

5. Pile à combustible selon l'une quelconque des revendications 1 à 3, **caractérisée en ce que** la couche de diffusion (16) est en silicium poreux.

6. Pile à combustible selon l'une quelconque des revendications 1 à 5, **caractérisée en ce que** les couches catalytiques (7) des première et seconde électrodes sont de nature et/ou de structure différentes.

7. Pile à combustible selon l'une quelconque des revendications 1 à 6, **caractérisée en ce qu'**elle comporte, côte à côte, une pluralité d'empilements (5), deux empilements adjacents comportant une cloison (17c) commune, des bornes (32) de la pile étant connectées aux cloisons (17a,17b) situées aux extrémités de la pluralité d'empilements.

8. Pile à combustible selon l'une quelconque des revendications 1 à 7, **caractérisée en ce qu'**elle comporte au moins deux empilements (5) superposés, une couche électriquement isolante (20), disposée entre le substrat de support (1) et l'empilement (5) correspondant, comportant des passages (21) pour un fluide entre les couches de diffusion (16) de deux empilements (5) superposés.

9. Pile à combustible selon l'une quelconque des revendications 1 à 6, **caractérisée en ce que** chaque cloison (17) séparant deux empilements adjacents comporte un canal d'injection (8) d'un fluide comportant deux parois (18a, 18b), perpendiculaires au substrat de support (25) et munies chacune d'une pluralité d'orifices (24) traversants pour l'injection d'un même fluide dans les couches de diffusion (16a, 16b) adjacentes séparées par ladite cloison (17).

10. Pile à combustible selon la revendication 9, **caractérisée en ce qu'**elle comporte une plaque (30) de distribution munie de canaux de distribution (23) connectés aux canaux d'injection (8).

11. Pile à combustible selon l'une des revendications 9 et 10, **caractérisée en ce que** les membranes électrolytiques (6) des empilements (5) adjacents sont constituées par des segments d'une membrane, continue, en forme de créneaux et perpendiculaire au substrat de support (25), un ensemble constitué par une couche catalytique (7) et une couche de diffusion (16) étant disposé de part et d'autre de ladite membrane continue, une cloison (17) étant disposée entre deux segments perpendiculaires au substrat de support (25), deux couches de diffusion (16) adjacentes, disposées de part et d'autre d'une cloison (17), étant disposées d'un même côté de la membrane continue.

12. Pile à combustible selon la revendication 11, **caractérisée en ce qu'**elle comporte des connexions métalliques (28) en forme de peignes interdigités, un peigne étant connecté aux cloisons correspondant à un même type d'électrode.

13. Pile à combustible selon la revendication 12, **caractérisée en ce que** les connexions métalliques sont réalisées dans des couches de métallisation (28a, 28b, 28c) disposées entre le substrat de support (25) et les empilements.

14. Pile à combustible selon l'une quelconque des revendications 10 à 13, **caractérisée en ce qu'**elle comporte au moins un empilement inférieur et un empilement supérieur superposés, le substrat de support de l'empilement inférieur comportant des canaux de distribution et formant la plaque de distribution de l'empilement supérieur.

15. Procédé de réalisation d'une pile à combustible selon l'une quelconque des revendications 9 à 14, **caractérisé en ce qu'**il comporte les étapes successives suivantes :
- le report d'une plaque en un matériau constituant les cloisons (17a, 17b) de support sur le substrat de support (25), des moyens d'interconnexion électrique (28a, 28b, 28c) étant disposés sur la plaque et/ou le substrat de support (25),
- la gravure des cloisons dans la plaque,
- le dépôt des couches de diffusion (16) et des couches catalytique (7) sur les cloisons par électrodéposition, avec polarisation des cloisons par l'intermédiaire des moyens d'interconnexion électrique (28a, 28b, 28c).

16. Procédé selon la revendication 15, **caractérisé en ce que** l'électrolyte est injectée entre les couches catalytiques (7).

## Claims

1. A fuel cell comprising at least one stack (5) provided with an electrolytic membrane (6) situated between a first electrode (15a) and a second electrode (15b) perpendicular to a support substrate (1, 25), said first and second electrodes (15a, 15b) each comprising a catalytic layer (7a,7b) in contact with the electrolytic membrane (6), a cell **characterized in that** each electrode comprises a porous fluid feed diffusion layer (16), said diffusion layer being electrically conductive and separated from the membrane by the associated catalytic layer, and **in that** each stack (5) is sandwiched between electrically conductive first and second support partitions (17a, 17b) perpendicular to the support substrate (1) and constituting current collectors of the stack (5), said support partitions (17a, 17b) being electrically insulated from one another.

2. The fuel cell according to claim 1, **characterized in that** the support partitions (17) are insulated from one another by an insulating layer (20) arranged between the support substrate (1,25) and the corresponding stack (5).

3. The fuel cell according to claim 1, **characterized in that** the support substrate (1, 25) is made from electrically insulating material.

4. The fuel cell according to any one of claims 1 to 3, **characterized in that** the diffusion layer (16) of each electrode (15a, 15b) comprises a plurality of nanowires or nanotubes substantially parallel to the support substrate (1) and joining the catalytic layer (7) of the electrode to the corresponding partition (17).

5. The fuel cell according to any one of claims 1 to 3, **characterized in that** the diffusion layer (16) is made from porous silicon.

6. The fuel cell according to any one of claims 1 to 5, **characterized in that** the catalytic layers (7) of the first and second electrodes are of different nature and/or structure.

7. The fuel cell according to any one of claims 1 to 6, **characterized in that** it comprises a plurality of stacks (5) arranged side by side, two adjacent stacks comprising a common partition (17c), terminals (32) of the cell being connected to the partitions (17a,17b) situated at the ends of the plurality of stacks.

8. The fuel cell according to any one of claims 1 to 7, **characterized in that** it comprises at least superposed two stacks (5), an electrically insulating layer (20) arranged between the support substrate (1) and the corresponding stack (5) comprising passages (21) for a fluid between the diffusion layers (16) of two superposed stacks (5).

9. The fuel cell according to any one of claims 1 to 6, **characterized in that** each partition (17) separating two adjacent stacks comprises an injection channel (8) of a fluid comprising two walls (18a, 18b) perpendicular to the support substrate (25) and each provided with a plurality of through holes (24) for injection of one and the same fluid into the adjacent diffusion layers (16a, 16b) separated by said partition (17).

10. The fuel cell according to claim 9, **characterized in that** it comprises a distribution wafer (30) provided with distribution channels (23) connected to the injection channels (8).

11. The fuel cell according to one of claims 9 and 10, **characterized in that** the electrolytic membranes (6) of the adjacent stacks (5) are formed by segments of a continuous membrane in the form of crenelations and perpendicular to the support substrate (25), an assembly constituted by a catalytic layer (7) and a diffusion layer (16) being arranged on each side of said continuous membrane, a partition (17) being arranged between two segments perpendicular to the support substrate (25), two adjacent diffusion layers (16) arranged on each side of a partition (17) being arranged on the same side of the continuous membrane.

12. The fuel cell according to claim 11, **characterized in that** it comprises metal connections (28) in the form of interdigital combs, a comb being connected to the partitions corresponding to one and the same type of electrode.

13. The fuel cell according to claim 12, **characterized in that** the metal connections are made in metallization layers (28a, 28b, 28c) arranged between the support substrate (25) and the stacks.

14. The fuel cell according to any one of claims 10 to 13, **characterized in that** it comprises superposing at least one bottom stack and one top stack, the support substrate of the bottom stack comprising distribution channels and forming the distribution wafer of the top stack.

15. A method for producing a fuel cell according to any one of claims 9 to 14, **characterized in that** it comprises the following successive steps:
- transfer of a wafer made from a material forming the support partitions (17a, 17b) onto the support substrate (25), electric interconnection means (28a, 28b, 28c) being arranged on the wafer and/or support substrate (25),
- etching of the partitions in the wafer,
- deposition of the diffusion layers (16) and catalytic layers (7) on the partitions by electrodeposition, with polarization of the partitions by means of the electric interconnection means (28a, 28b, 28c).

16. The method according to claim 15, **characterized in that** the electrolyte is injected between the catalytic layers (7).

## Patentansprüche

1. Brennstoffzelle, umfassend wenigstens einen Stapel (5), der mit einer elektrolytischen Membran (6) versehen ist, die zwischen einer ersten Elektrode (15a) und einer zweiten Elektrode (15b), welche zu einem Trägersubstrat (1, 25) senkrecht verlaufen, gelegen ist, wobei die erste und die zweite Elektrode (15a, 15b) jeweils eine mit der elektrolytischen Membran (6) in Kontakt befindliche katalytische Schicht (7a, 7b) umfassen, Zelle, die **dadurch gekennzeichnet ist, dass** jede Elektrode eine poröse Diffusionsschicht (16) zur Fluidversorgung umfasst, wobei die Diffusionsschicht elektrisch leitend ist und von der Membran durch die zugeordnete katalytische Schicht getrennt ist, und dass jeder Stapel (5) zwischen einer ersten und einer zweiten Stütztrennwand (17a, 17b) sandwichartig angeordnet ist, die elektrisch leitend sind, zu dem Trägersubstrat (1) senkrecht verlaufen und Stromkollektoren des Stapels (5) bilden, wobei die Stütztrennwände (17a, 17b) untereinander elektrisch isoliert sind.

2. Brennstoffzelle nach Anspruch 1, **dadurch gekennzeichnet, dass** die Stütztrennwände (17) durch eine Isolierschicht (20), die zwischen dem Trägersubstrat (1, 25) und dem entsprechenden Stapel (5) angeordnet ist.

3. Brennstoffzelle nach Anspruch 1, **dadurch gekennzeichnet, dass** das Trägersubstrat (1, 25) aus elektrisch isolierendem Material gefertigt ist.

4. Brennstoffzelle nach einem der Ansprüche 1 bis 3, **dadurch gekennzeichnet, dass** die Diffusionsschicht (16) einer jeden Elektrode (15a, 15b) eine Vielzahl von Nanofäden oder Nanoröhren umfasst, die zu dem Trägersubstrat (1) im Wesentlichen parallel verlaufen und die die katalytische Schicht (7) der Elektrode mit der entsprechenden Trennwand (17) verbinden.

5. Brennstoffzelle nach einem der Ansprüche 1 bis 3, **dadurch gekennzeichnet, dass** die Diffusionsschicht (16) aus porösem Silizium besteht.

6. Brennstoffzelle nach einem der Ansprüche 1 bis 5, **dadurch gekennzeichnet, dass** die katalytischen Schichten (7) der ersten und der zweiten Elektrode unterschiedlicher Art und/oder Struktur sind.

7. βrennstoffzelle nach einem der Ansprüche 1 bis 6, **dadurch gekennzeichnet, dass** sie Seite an Seite eine Vielzahl von Stapeln (5) umfasst, wobei zwei benachbarte Stapel eine gemeinsame Trennwand (17c) aufweisen, wobei Anschlüsse (32) der Zelle an die an den Enden der Vielzahl von Stapeln gelegenen Trennwände (17a, 17b) angeschlossen sind.

8. Brennstoffzelle nach einem der Ansprüche 1 bis 7, **dadurch gekennzeichnet, dass** sie wenigstens zwei übereinander angeordnete Stapel (5) umfasst, wobei eine elektrisch isolierende Schicht (20), die zwischen dem Trägersubstrat (1) und dem entsprechenden Stapel (5) angeordnet ist, Durchlässe (21) für ein Fluid zwischen den Diffusionsschichten (16) von zwei übereinander angeordneten Stapeln (5) aufweist.

9. Brennstoffzelle nach einem der Ansprüche 1 bis 6, **dadurch gekennzeichnet, dass** jede zwei benachbarte Stapel trennende Trennwand (17) einen Kanal zum Einleiten (8) eines Fluids umfasst, der zwei Wände (18a, 18b) aufweist, welche zu dem Trägersubstrat (25) senkrecht verlaufen und jeweils mit einer Vielzahl von durchgehenden Öffnungen (24) für das Einleiten eines gleichen Fluids in die benachbarten, durch die Trennwand (17) getrennten Diffusionsschichten (16a, 16b) versehen sind.

10. Brennstoffzelle nach Anspruch 9, **dadurch gekennzeichnet, dass** sie eine Verteilerplatte (30) umfasst, die mit mit den Einleitungskanälen (8) verbundenen Verteilungskanälen (23) versehen ist.

11. Brennstoffzelle nach einem der Ansprüche 9 und 10, **dadurch gekennzeichnet, dass** die elektrolytischen Membranen (6) der benachbarten Stapel (5) von Segmenten einer durchgehenden zinnenförmigen und zu dem Trägersubstrat (25) senkrechten Membran gebildet sind, wobei eine von einer katalytischen Schicht (7) und einer Diffusionsschicht (16) gebildete Anordnung auf beiden Seiten der durchgehenden Membran angeordnet ist, wobei eine Trennwand (17) zwischen zwei zu dem Trägersubstrat (25) senkrechten Segmenten angeordnet ist, wobei zwei benachbarte, auf beiden Seiten einer Trennwand (17) angeordnete Diffusionsschichten (16) auf einer gleichen Seite der durchgehenden Membran angeordnet sind.

12. Brennstoffzelle nach Anspruch 11, **dadurch gekennzeichnet, dass** sie Metallverbindungen (28) in Form von ineinander greifenden Kämmen umfasst, wobei ein Kamm mit den Trennwänden verbunden ist, die einem gleichen Elektrodentyp entsprechen.

13. Brennstoffzelle nach Anspruch 12, **dadurch gekennzeichnet, dass** die Metallverbindungen in Metallisierungsschichten (28a, 28b, 28c), die zwischen dem Trägersubstrat (25) und den Stapeln angeordnet sind, ausgebildet sind.

14. Brennstoffzelle nach einem der Ansprüche 10 bis 13, **dadurch gekennzeichnet, dass** sie wenigstens einen unteren Stapel und einen oberen Stapel, die übereinander angeordnet sind, umfasst, wobei das Trägersubstrat des unteren Stapels Verteilungskanäle umfasst und die Verteilerplatte des oberen Stapels bildet.

15. Verfahren zur Herstellung einer Brennstoffzelle nach einem der Ansprüche 9 bis 14, **dadurch gekennzeichnet, dass** es die folgenden aufeinanderfolgenden Schritte umfasst:
- das Übertragen einer Platte aus einem die Stütztrennwände (17a, 17b) bildenden Material auf das Trägersubstrat (25), wobei Mittel zum elektrischen Zusammenschalten (28a, 28b, 28c) auf der Platte und/oder dem Trägersubstrat (25) angeordnet sind,
- das Ätzen der Trennwände in die Platte,
- das Abscheiden der Diffusionsschichten (16) und der katalytischen Schichten (7) auf den Trennwänden durch elektrolytische Metallabscheidung, mit Polarisation der Trennwände durch die Mittel zum elektrischen Zusammenschalten (28a, 28b, 28c).

16. Verfahren nach Anspruch 15, **dadurch gekennzeichnet, dass** der Elektrolyt zwischen die katalytischen Schichten (7) eingeleitet wird.
